# EUROPEAN PATENT SPECIFICATION

(11) **EP 3 154 177 B1**
(45) Date of publication and mention of the grant of the patent: **08.01.2020**
(21) Application number: 16191576.4
(22) Date of filing: 29.09.2016
(51) Int. Cl.: H02K 29/08, A45D 20/00, H02P 6/08, H02P 6/16, A47L 5/22, H02K 29/03

(54) **AIR FLOW REGULATING DEVICE**
VORRICHTUNG ZUR LUFTSTROMREGULIERUNG
DISPOSITIF DE REGULATION DE DEBIT D'AIR

(30) Priority: 09.10.2015 CN 201510649031
(43) Date of publication of application: 12.04.2017
(73) Proprietor: Johnson Electric International AG, 3280 Murten (CH)
(72) Inventor: Zhou, Qiang, Hong Kong (HK); Li, Jing, Hong Kong (HK); Chai, Jie, Hong Kong (HK); Zhang, Tao, Hong Kong (HK); Ng, Ka Lung, Hong Kong (HK); Lo, Yuk Tung, Hong Kong (HK); Ma, Hai Bo, Hong Kong (HK)
(74) Representative: Hocking, Adrian Niall

(56) References cited:
- EP-A1- 1 014 541
- EP-A1- 1 103 202
- EP-A2- 1 942 575
- GB-A- 2 469 142
- US-A1- 2004 051 496
- US-A1- 2015 042 194

## Description

### TECHNICAL FIELD

The present disclosure relates to an air flow regulating device, and in particular to an air flow regulating device having a brushless motor.

### BACKGROUND

At present, a hair dryer with a power of about 80W on the market is generally provided with a single-phase series motor to drive an impeller thereof. The single-phase series motor is also known as a universal motor and has armature winding and a commutator. The armature winding is connected in series with a stator excitation winding via a brush. During operation of a motor, the brush will wear away, resulting in a short lifetime of the hair dryer, and carbon powder produced during wearing of the brush may be blown into hair. Examples of conventional electric tools are disclosed in EP1103202A1 and GB2469142A, for instance.

### SUMMARY

An air flow regulating device is provided according to the present disclosure, which includes a housing, an air supply unit and a circuit board which are arranged inside the housing. The air supply unit comprises an impeller and a single-phase permanent magnet brushless motor configured to drive the impeller. The single-phase permanent magnet brushless motor comprises a stator and a rotor which can rotate relative to the stator. The stator surrounds the rotor and comprises a stator core and a single-phase winding wound around the stator core. The rotor comprises a shaft and a permanent magnet fixed to the shaft. Numbers of magnetic poles of the stator and the rotor are the same and not greater than six. An outer diameter of the stator core is less than 35mm and/or an axial thickness of the stator core is between 10mm and 20mm. The stator core comprises a yoke, a number of winding portions extending from the yoke along a radial direction and two pole shoes extending toward two sides along a circumferential direction from an end of each winding portion, the winding is wound around the winding portions, a wire slot is formed away from a center of two adjacent winding portions, pole shoes of the two adjacent winding portions are disconnected by a slot opening, and a chamfering is provided near the slot opening only on the inner circumferential surface of a smaller pole shoe.

Optionally, the circuit board is provided with a power supply terminal and an inverter configured to provide an alternating current for the single-phase winding, the air flow regulating device is a hair dryer, and a heating unit which is electrically connected to the circuit board is arranged inside the housing.

Preferably, an air supply rate of the hair dryer is 80 to 140 cubic meters per hour, and a wind pressure of the hair dryer is 280 to 720 pascal.

Preferably, a rated output power of the single-phase permanent magnet brushless motor is 50 to 100 watts.

Preferably, the power supply terminal is configured to access an external alternating current power supply, and an input voltage of the inverter is not lower than that of the power supply terminal.

Optionally, the circuit board is provided with a power supply terminal and an inverter configured to provide an alternating current for the single-phase winding, the air flow regulating device is a vacuum cleaner and a rated output power of the vacuum cleaner is lower than 100 watts.

Preferably, a position detector and motor driver is electrically connected between the power supply terminal and the inverter, which is configured to detect a magnetic field position of a rotor of the single-phase permanent magnet brushless motor and output at least two trigger signals which are basically inverted with respect to each other for the inverter.

Preferably, the position detector and motor driver is a single Hall effect controller chip having at least four pins.

Preferably, further comprising a rectifier and filter circuit configured to convert an alternating supply voltage accessed by the power supply terminal into a direct voltage, and the inverter is an H-bridge circuit comprising four semiconductor switches, at least one of the four semiconductor switches being a metal-oxide semiconductor field effect transistor which is abbreviated as MOSFET or an insulated gate bipolar transistor which is abbreviated as IGBT.

Preferably, a switch driver is electrically connected between the position detector and motor driver and the inverter and configured to amplify a trigger signal outputted by the position detector and motor driver and provide the amplified signal to the inverter to drive the MOSFET or IGBT.

Preferably, radial thickness of the pole shoe decreases gradually along a direction from the winding portion to the slot opening and a basically uniform air gap is formed between an outer circumferential surface of the rotor and the pole shoes.

Preferably, pole shoes of the adjacent winding portions are disconnected by the slot opening, and a width of the slot opening is less than or equal to four times a thickness of the uniform air gap.

Preferably, the permanent magnet is a ring magnet, and an outer diameter of the ring magnet is between 7.5mm and 11mm.

Preferably, no MCU is provided in the air flow regulating device.

The air flow adjusting device according to the present disclosure is provided with a single-phase permanent magnet brushless motor which is driven by a simple drive control circuit, which improves a product lifetime and reduces a cost.

### BRIEF DESCRIPTION OF THE DRAWINGS

The present disclosure is further described hereinafter in conjunction with drawings of the specification and some embodiments.
Figure 1 is an overall schematic structural diagram of a hair dryer according to an embodiment of the present disclosure;
Figure 2 is a functional module diagram of a hair dryer according to an embodiment of the present disclosure;
Figure 3 is a detailed block circuit diagram of a hair dryer according to an embodiment of the present disclosure;
Figure 4 is a more detailed block circuit diagram of a hair dryer according to an embodiment of the present disclosure;
Figure 5 is a functional module diagram of a hair dryer according to an optional embodiment of the present disclosure;
Figure 6 is a detailed circuit diagram of a starting time control module in a hair dryer according to an optional embodiment of the present disclosure;
Figure 7 is a schematic diagram of a single-phase direct current brushless motor in a hair dryer according to a preferred embodiment of the present disclosure;
Figure 8 is a schematic diagram of the single-phase direct current brushless motor shown in Figure 7 with a housing thereof removed;
Figure 9 is a simplified schematic diagram of the single-phase direct current brushless motor shown in Figure 7 with a housing, a stator winding and a rotor shaft thereof removed;
Figure 10 is a schematic diagram of a stator core of the single-phase direct current brushless motor shown in Figure 7;
Figure 11 is a schematic diagram of a rotor core and a permanent magnet of a rotor of the single-phase direct current brushless motor shown in Figure 7;
Figure 12 shows magnetic circuit of a rotor magnet of a single-phase direct current brushless motor according to the present disclosure;
Figure 13 is a schematic diagram of a stator core of a single-phase direct current brushless motor according to a second embodiment of the present disclosure;
Figure 14 is a schematic diagram of a rotor core and a permanent magnet of a rotor according to the second embodiment of the present disclosure;
Figure 15 is a schematic diagram of a stator core of a single-phase direct current brushless motor according to a third embodiment of the present disclosure;
Figure 16 is a schematic diagram of a stator core of a single-phase direct current brushless motor according to a fourth embodiment of the present disclosure;
Figure 17 is a schematic diagram of a stator core of a single-phase direct current brushless motor according to a fifth embodiment of the present disclosure;
Figure 18 is a detailed schematic structural diagram of the hair dryer shown in Figure 1 according to an embodiment of the present disclosure; and
Figure 19 is a partial schematic structural diagram of an air supply unit of the hair dryer shown in Figure 1 according to an embodiment of the present disclosure.

### DETAILED DESCRIPTION OF THE EMBODIMENTS

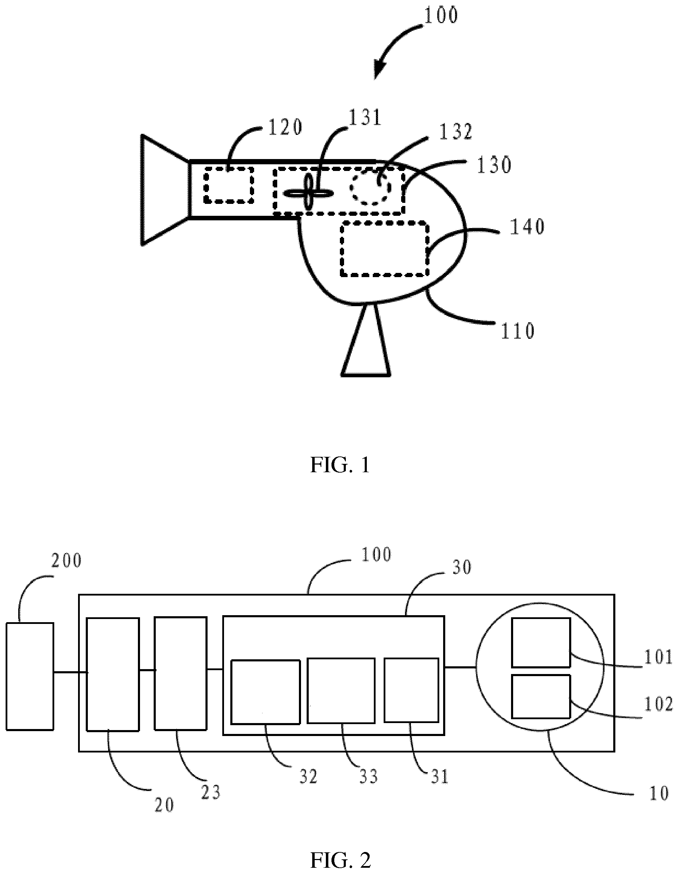

Referring to Figures 1 and 2, a hair dryer 100 according to an embodiment of the present disclosure includes a housing 110, a heating unit 120 arranged inside the housing 110, an air supply unit 130 and a circuit board 140, and the air supply unit 130 includes a impeller 131 and a single-phase direct current brushless motor 10 which is configured to drive the impeller 131. As shown in Figure 2, the single-phase direct current brushless motor 10 includes a stator 101 and a rotor 102 which is rotatable relative to the stator 101. Positions of and relationships between the components in the hair dryer 100 shown in Figure 1 are merely an example rather than represent actual positional relationships.

The hair dryer 100 further includes a power supply terminal 20 and a drive control circuit 30. The power supply terminal 20 is configured to access a supply voltage, and the drive control circuit 30 is configured to drive, based on the supply voltage accessed by the power supply terminal 20, the single-phase direct current brushless motor 10 to operate.

As shown in Figure 2, in the embodiment, the power supply terminal 20 is configured to be connected to an alternating current power supply 200 and access an alternating supply voltage provided by the alternating current power supply 200. The power supply terminal 20 may be a mains plug contact or the like. A rectifier and filter circuit 23 includes an anode output terminal 231 and a cathode output terminal 232. In the embodiment, the rectifier and filter circuit 23 is configured to convert the alternating supply voltage accessed by the power supply terminal 20 into a direct voltage and filter the converted direct voltage so as to output a stable direct voltage. It should be understood that the filter is preferred but not a must. The drive control circuit 30 is connected between the rectifier and filter circuit 23 and the single-phase direct current brushless motor 10, and is configured to detect a rotational position of a rotor 102 in the single-phase direct current brushless motor 10 and alternately change a current direction of the single-phase direct current brushless motor 10, thereby driving the rotor 102 to keep rotating. An input voltage of the inverter is not lower than that of the power supply terminal 20, that is, a voltage of the alternating current power supply 200 accessed by the power supply terminal 20.

The alternating current power supply 200 may be a mains supply, such as a mains supply with a voltage of 120V (volt) or 230V

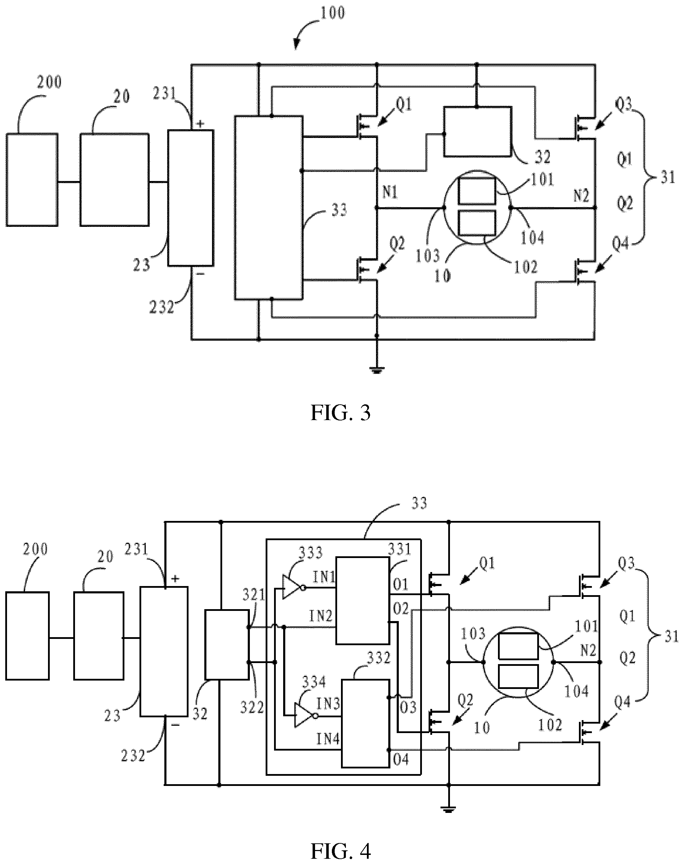

Reference is made to Figure 3, which is a detailed block circuit diagram of a hair dryer 100 according to an embodiment of the present disclosure. The drive control circuit 30 includes an inverter 31 and a position detector and motor driver 32, the position detector and motor driver 32 is electrically connected between the inverter 31 and the power supply terminal 20, and is configured to detect a magnetic field position of a rotor of a single-phase direct current brushless motor and output, based on the detected position of the rotor, at least two trigger signals which are basically inverted with respect to each other to enable the inverter 31 to generate an alternating current.

The hair dryer 100 further includes a switch driver 33, and the inverter 31 is arranged between the rectifier and filter circuit 23 and the single-phase direct current brushless motor 10. The position detector and motor driver 32 is configured to detect a rotational position of the rotor 102 of the single-phase direct current brushless motor 10. The switch driver 33 is connected to both the inverter 31 and the position detector and motor driver 32 and configured to drive switches of the inverter 31 to convert a direct current generated by the rectifier and filter circuit 23 into an alternating current, thereby driving the rotor 102 to keep rotating.

Specifically, as shown in Figure 3, the single-phase direct current brushless motor 10 further includes a first electrode terminal 103 and a second electrode terminal 104, the stator 101 includes a winding 1011, and two terminals of the stator 101 are electrically connected to the first electrode terminal 103 and the second electrode terminal 104, respectively. The inverter 31 according to the present disclosure is an H-bridge circuit, which is electrically connected between the anode output terminal 231 and the cathode output terminal 232 of the rectifier and filter circuit 23, the first electrode terminal 103 and the second electrode terminal 104, and configured to establish a first power supply path or a second power supply path between the anode output terminal 231 and the cathode output terminal 232 of the rectifier and filter circuit 23, the first electrode terminal 103 and the second electrode terminal 104.

The position detector and motor driver 32 is configured to detect a rotational position of the rotor 102 of the single-phase direct current brushless motor 10, generate a first trigger signal or a second trigger signal and transmit the same to the switch driver 33. In a case that the first trigger signal is received, the switch driver 33 drives the inverter 31 to establish the first power supply path. In a case that the second trigger signal is received, the switch driver 33 drives the inverter 31 to establish the second power supply path.

In the first power supply path, the anode output terminal 231 and the cathode output terminal 232 of the rectifier and filter circuit 23 are respectively connected to the first electrode terminal 103 and the second electrode terminal 104. In the second power supply path, the anode output terminal 231 and the cathode output terminal 232 of the rectifier and filter circuit 23 are respectively connected to the second electrode terminal 104 and the first electrode terminal 103.

In the embodiment, the rotor 102 includes a permanent magnet and can rotate relative to the stator 101. The position detector and motor driver 32 is arranged near the single-phase direct current brushless motor 10, generates the first trigger signal in a case that an N magnetic pole of the rotor 102 is detected, and generates the second trigger signal in a case that an S magnetic pole of the rotor 102 is detected. Thereby, each time the N or S magnetic pole of the rotor rotates to near the position detector and motor driver 32, the position detector and motor driver 32 generates a corresponding trigger signal and triggers the switch driver 33 to drive the inverter 31 to establish a corresponding power supply path. Thereby, a positive polarity and a negative polarity of a power supply provided for the first electrode terminal 103 and the second electrode terminal 104 of the single-phase direct current brushless motor 10 are interchanged, so that a direction of a current flowing through the winding 1011 of the stator 101 can change alternately to generate an alternating magnetic field to drive the rotor 102 to keep rotating. During rotating, the rotor 102 drives impeller (not shown in the figure) of the hair dryer 100 to rotate to generate wind. It should be understood that, in an alternative embodiment, the position detector and motor driver 32 may generate the first trigger signal in a case that the S magnetic pole of the rotor 102 is detected, and generate the second trigger signal in a case that the N magnetic pole of the rotor 102 is detected.

Specifically, as shown in Figure 3, in the embodiment, the inverter 31 is an H-bridge circuit, which includes a first semiconductor switch Q1, a second semiconductor switch Q2, a third semiconductor switch Q3 and a fourth semiconductor switch Q4. The first semiconductor switch Q1 and the second semiconductor switch Q2 are connected in series across the anode output terminal 231 and the cathode output terminal 232 of the rectifier and filter circuit 23 in sequence, and the third semiconductor switch Q3 and the fourth semiconductor switch Q4 are connected in series across the anode output terminal 231 and the cathode output terminal 232 of the rectifier and filter circuit 23 in sequence. That is, a branch of the semiconductor switch Q1 and the second semiconductor switch Q2 and a branch of the third semiconductor switch Q3 and the fourth semiconductor switch Q4 are connected in parallel across the anode output terminal 231 and the cathode output terminal 232 of the rectifier and filter circuit 23. The first electrode terminal 103 and the second electrode terminal 104 of the single-phase direct current brushless motor 10 are respectively connected to a connection node N1 of the first semiconductor switch Q1 and the second semiconductor switch Q2 and a connection node N2 of the third semiconductor switch Q3 and the fourth semiconductor switch Q4.

The switch driver 33 is electrically connected to each of the first semiconductor switch Q1, the second semiconductor switch Q2, the third semiconductor switch Q3 and the fourth semiconductor switch Q4. In a case that the first trigger signal is received, the switch driver 33 drives the first semiconductor switch Q1 and the fourth semiconductor switch Q4 to be switched on and the second semiconductor switch Q2 and the third semiconductor switch Q3 to be switched off. In this case, the first electrode terminal 103 of the single-phase direct current brushless motor 10 is connected to the anode output terminal 231 of the rectifier and filter circuit 23 via the first semiconductor switch Q1 which is switched on, and the second electrode terminal 104 of the single-phase direct current brushless motor 10 is connected to the cathode output terminal 232 of the rectifier and filter circuit 23 via the fourth semiconductor switch Q4 which is switched on. Thereby, the inverter 31 in this case forms the first power supply path.

In a case that the second trigger signal is received, the switch driver 33 drives the second semiconductor switch Q2 and the third semiconductor switch Q3 to be switched on and the first semiconductor switch Q1 and the fourth semiconductor switch Q4 to be switched off. In this case, the first electrode terminal 103 of the single-phase direct current brushless motor 10 is connected to the cathode output terminal 232 of the rectifier and filter circuit 23 via the second semiconductor switch Q2 which is switched on, and the second electrode terminal 104 of the single-phase direct current brushless motor 10 is connected to the anode output terminal 231 of the rectifier and filter circuit 23 via the third semiconductor switch Q3 which is switched on. Thereby, the inverter 31 in this case forms the second power supply path.

Thus, as described above, the position detector and motor driver 32 alternately generates the first trigger signal and the second trigger signal, which enables the switch driver 33 to drive the inverter 31 to alternately establish the first power supply path and the second power supply path, thereby changing a direction of a current flowing through the stator 101 to drive the rotor 102 to keep rotating.

In the embodiment, the switch driver 33 is a MOSFET driver. At least one of the four semiconductor switches is a MOSFET. For example, all of the first semiconductor switch Q1, the second semiconductor switch Q2, the third semiconductor switch Q3 and the fourth semiconductor switch Q4 are MOSFETs, or some of the four semiconductor switches are MOSFETs and the others are IGBTs or triode BJTs. The switch driver 33 is connected to gates or bases of the first semiconductor switch Q1, the second semiconductor switch Q2, the third semiconductor switch Q3 and the fourth semiconductor switch Q4, and configured to drive the first semiconductor switch Q1, the second semiconductor switch Q2, the third semiconductor switch Q3 and the fourth semiconductor switch Q4 to be switched on or off correspondingly.

Reference is made to Figure 4, which is a more detailed block circuit diagram the hair dryer 100 according to an embodiment of present disclosure and schematically shows a specific structure of a switch driver 33. As shown in Figure 4, the switch driver 33 includes a first half-bridge driver 331, a second half-bridge driver 332, a first phase inverter 333 and a second phase inverter 334. The position detector and motor driver 32 includes a first trigger terminal 321 and a second trigger terminal 322. The first half-bridge driver 331 includes a first input terminal IN1, a second input terminal IN2, a first output terminal O1 and a second output terminal O2. The second half-bridge driver 332 includes a first input terminal IN3, a second input terminal IN4, a first output terminal O3 and a second output terminal O4.

The first trigger terminal 321 of the position detector and motor driver 32 is connected to the second input terminal IN2 of the first half-bridge driver 331 and also connected to the first input terminal IN3 of the second half-bridge driver 332 via the second phase inverter 334. The second trigger terminal 322 of the position detector and motor driver 32 is connected to the first input terminal IN1 of the first half-bridge driver 331 via the first phase inverter 333, and the second trigger terminal 322 is also connected to the second input terminal IN4 of the second half-bridge driver 332.

The first output terminal O1 of the first half-bridge driver 331 is connected to the first semiconductor switch Q1, and configured to output a corresponding control signal to control the first semiconductor switch Q1 to be switched on or off. The second output terminal O2 of the first half-bridge driver 331 is connected to the second semiconductor switch Q2, and configured to output a corresponding control signal to control the second semiconductor switch Q2 to be switched on or off. The first output terminal O3 of the second half-bridge driver 332 is connected to the third semiconductor switch Q3, and configured to output a corresponding control signal to control the third semiconductor switch Q3 to be switched on or off. The second output terminal O4 of the second half-bridge driver 332 is connected to the fourth semiconductor switch Q4, and configured to output a corresponding control signal to control the fourth semiconductor switch Q4 to be switched on or off.

An output of the first output terminal O1 of the first half-bridge driver 331 follows a voltage inputted into the first input terminal IN1, and an output of the second output terminal O2 of the first half-bridge driver 331 is inverse to a voltage inputted into the second input terminal IN2. Similarly, an output of the first output terminal O3 of the second half-bridge driver 332 follows an input of the first input terminal IN3, and an output of the second output terminal O4 of the second half-bridge driver 332 is inverse to an input of the second input terminal IN4.

In a case that the position detector and motor driver 32 detects an N magnetic pole, the first trigger terminal 321 and the second trigger terminal 322 of the position detector and motor driver 32 respectively output a high level and a low level, that is, the position detector and motor driver 32 outputs a first trigger signal of "10". In a case that the position detector and motor driver detects an S magnetic pole, the first trigger terminal 321 and the second trigger terminal 322 of the position detector and motor driver 32 respectively output a low level and a high level, that is, the position detector and motor driver 32 outputs a second trigger signal of "01".

In an embodiment, all of the first semiconductor switch Q1, the second semiconductor switch Q2, the third semiconductor switch Q3 and the fourth semiconductor switch Q4 are switches which are switched on by a high level, such as NMOSFETs, NPNBJTs or the like.

Thereby, in a case that the position detector and motor driver 32 detects the N magnetic pole and a high level and a low level are respectively outputted by the first trigger terminal 321 and the second trigger terminal 322, the high level outputted by the first trigger terminal 321 is transmitted to the second input terminal IN2 of the first half-bridge driver 331 and inverted to generate a low level by the second phase inverter 334, and the low level is transmitted to the first input terminal IN3 of the second half-bridge driver 332. The low level outputted by the first trigger terminal 321 is transmitted to the second input terminal IN4 of the second half-bridge driver 332 and inverted to generate a high level by the first phase inverter 333, and the high level is transmitted to the first input terminal IN1 of the first half-bridge driver 331.

In this case, a high level is inputted into each of the first input terminal IN1 and the second input terminal IN2 of the first half-bridge driver 331, and a low level is inputted into each of the first input terminal IN3 and the second input terminal IN4 of the second half-bridge driver 332. As described above, a voltage of a first output terminal of a half-bridge driver follows that of a first input terminal, and a voltage of a second output terminal of the half-bridge driver is inverse to that of the second input terminal. Hence, the first output terminal O1 and the second output terminal O2 of the first half-bridge driver 331 respectively output a high level and a low level, to control the first semiconductor switch Q1 to be switched on and the second semiconductor switch Q2 to be switched off. The first output terminal O3 and the second output terminal O4 of the second half-bridge driver 332 respectively output a low level and a high level, to control the third semiconductor switch Q3 to be switched off and the fourth semiconductor switch Q4 to be switched on.

In this case, the first electrode terminal 103 of the single-phase direct current brushless motor 10 is connected to the anode output terminal 231 of the rectifier and filter circuit 23 via the first semiconductor switch Q1 which is switched on, and the second electrode terminal 104 of the single-phase direct current brushless motor 10 is connected to the cathode output terminal 232 of the rectifier and filter circuit 23 via the fourth semiconductor switch Q4 which is switched on. Thereby, the inverter 31 forms the first power supply path, and the current through the stator 101 of the single-phase direct current brushless motor 10 flows in a first flow direction.

In a case that the position detector and motor driver 32 detects the S magnetic pole and the first trigger terminal 321 and the second trigger terminal 322 respectively output a low level and a high level, the low level outputted by the first trigger terminal 321 is transmitted to the second input terminal IN2 of the first half-bridge driver 331, and inverted to generate a high level by the second phase inverter 334, and the high level is transmitted to the first input terminal IN3 of the second half-bridge driver 331. The high level outputted by the second trigger terminal 322 is transmitted to the second input terminal IN4 of the second half-bridge driver 332, and inverted to generate a low level by the first phase inverter 333, and the low level is transmitted to the first input terminal IN1 of the first half-bridge driver 331.

In this case, a low level is inputted into each of the first input terminal IN1 and the second input terminal IN2 of the first half-bridge driver 331, and a high level is inputted into each of the first input terminal IN3 and the second input terminal IN4 of the second half-bridge driver 332. Correspondingly, the first output terminal O1 and the second output terminal O2 of the first half-bridge driver 331 respectively output a low level and a high level, to control the first semiconductor switch Q1 to be switched off and the second semiconductor switch Q2 to be switched on. The first output terminal O3 and the second output terminal O4 of the second half-bridge driver 332 respectively output a high level and a low level, to control the third semiconductor switch Q3 to be switched on and the fourth semiconductor switch Q4 to be switched off.

In this case, the first electrode terminal 103 of the single-phase direct current brushless motor 10 is connected to the cathode output terminal 232 of the rectifier and filter circuit 23 via the second semiconductor switch Q2 which is switched on, and the second electrode terminal 104 of the single-phase direct current brushless motor 10 is connected to the anode output terminal 231 of the rectifier and filter circuit 23 via the third semiconductor switch Q3 which is switched on. Thereby, the inverter 31 forms the second power supply path, and the current through the stator 101 of the single-phase direct current brushless motor flows in a second flow direction which is opposite to the first flow direction.

The first half-bridge driver 331 and the second half-bridge driver 332 are configured to boost the high level or the low level outputted by the position detector and motor driver 32 so as to drive a MOSFET which requires a great current to drive. In a case that there is no MOSFET in the inverter 31, the first semiconductor switch Q1, the second semiconductor switch Q2, the third semiconductor switch Q3 and the fourth semiconductor switch Q4 can be directly driven by trigger signals outputted by the position detector and motor driver 32 to be switched on or off, without the first half-bridge driver 331 and the second half-bridge driver 332, that is, without the switch driver 33. For example, the first trigger terminal 321 of the position detector and motor driver 32 is connected to the first semiconductor switch Q1 and the fourth semiconductor switch Q4, and controls the first semiconductor switch Q1 and the fourth semiconductor switch Q4 to be switched on or off at the same time; and the second trigger terminal 322 of the position detector and motor driver 32 is connected to the second semiconductor switch Q2 and the third semiconductor switch Q3, and controls the second semiconductor switch Q2 and the third semiconductor switch Q3 to be switched on or off at the same time.

In a preferred embodiment, the first half-bridge driver 331 and the second half-bridge driver 332 each may be an IR2103 chip. The position detector and motor driver 32 may be a Hall effect controller, which includes a Hall sensor and a corresponding control module and may be an AH284 chip. The Hall effect controller chip includes at least four pins, that is, the first trigger terminal 321, the second trigger terminal 322, as described above, a power pin and a ground pin, and the power pin and the ground pin are electrically connected to the anode output terminal 231 and the cathode output terminal 232 of the rectifier and filter circuit 23, respectively. Alternatively, the position detector and motor driver 32 may include a current sensor and a corresponding control module, which determines the N magnetic pole and the S magnetic pole by detecting changes of the current and outputs corresponding control signals. The first half-bridge driver 331, the second half-bridge driver 332 and the position detector and motor driver 32 may also be any other suitable chips, and the chips listed above are only intended to be a reference for practical implementations.

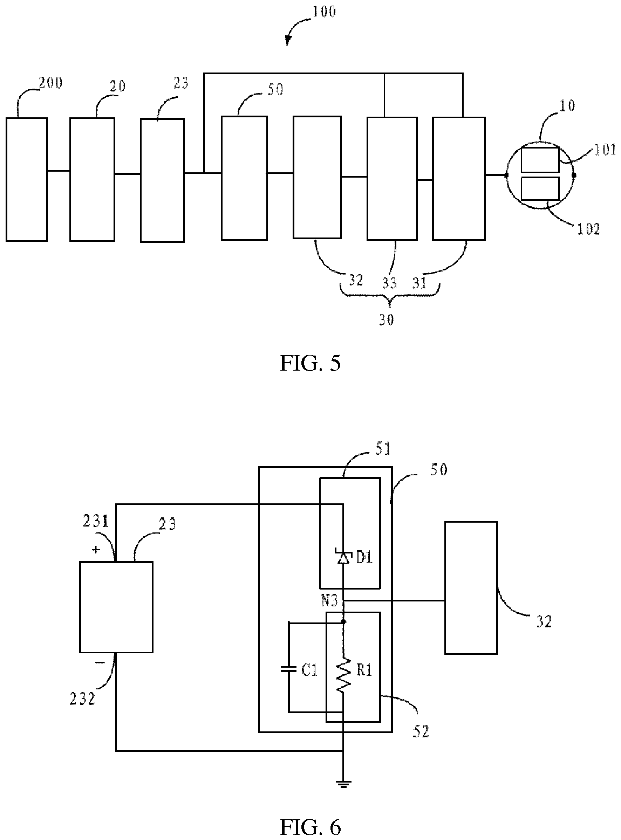

Reference is made to Figure 5, which is a functional module diagram of a hair dryer 100 according to an optional embodiment of the present disclosure. The hair dryer 100 according to any of the embodiments described above may further include a starting time control module 50. The starting time control module 50 is electrically connected between the power supply terminal 20 and the position detector and motor driver 32, and configured to control a starting time of the position detector and motor driver 32 to be synchronous with that of the switch driver 33. In a case that the hair dryer 100 has a rectifier and filter circuit 23, the rectifier and filter circuit 23 functions as an input power supply of the whole hair dryer 100, and the starting time control module 50 is electrically connected between the rectifier and filter circuit 23 and the position detector and motor driver 32.

In general, a starting voltage of the position detector and motor driver 32 is lower than that of the switch driver 33, and after the power supply terminal 20 accesses an alternating current power supply 200, a voltage outputted by the power supply terminal 20 and the rectifier and filter circuit 23 gradually rises. Therefore, the position detector and motor driver 32 may have started to operate while the switch driver 33 has not, when the voltage outputted by the power supply terminal 20 and the rectifier and filter circuit 23 rises higher than the starting voltage of the position detector and motor driver 32 and lower than the starting voltage of the switch driver 33. In this case, the position detector and motor driver 32 may easily misjudge.

In the embodiment, the starting time control module 50 adjusts the starting voltage of the position detector and motor driver 32 to be equal to that of the switch driver 33, thereby synchronizing starting of the position detector and motor driver 32 and that of the switch driver 33.

Reference is made to Figure 6, which is a detailed circuit diagram of the starting time control module 50. The starting time control module 50 includes a voltage division unit 51 and a power-on unit 52. The voltage division unit 51 and the power-on unit 52 are connected in series across the anode output terminal 231 and the cathode output terminal 232 of the rectifier and filter circuit 23. The position detector and motor driver 32 is connected to a connection node N3 of the voltage division unit 51 and the power-on unit 52. The voltage division unit 51 has a turn-on voltage, and is turned on in a case that a voltage applied thereto is higher than or equal to the turn-on voltage. The power-on unit 52 is configured to generate a voltage after the voltage division unit 51 is turned on and provide the voltage for the position detector and motor driver 32.

A sum of the turn-on voltage of the voltage division unit 51 and the starting voltage of the position detector and motor driver 32 is equal to the starting voltage of the switch driver 33. Thereby, in a case that a voltage outputted by the rectifier and filter circuit 23 is higher than the turn-on voltage of the voltage division unit 51, the voltage division unit 51 is turned on, and in a case that the voltage outputted by the rectifier and filter circuit 23 continues rising till a voltage of the power-on unit 52 is equal to the starting voltage of the position detector and motor driver 32, the position detector and motor driver 32 starts to operate.

In an example, the voltage division unit 51 includes a Zener diode D1, and the power-on unit 52 includes a resistor R1. A cathode of the Zener diode D1 is connected to the anode output terminal 231, and an anode of the Zener diode D1 is connected to the position detector and motor driver 32 and connected to the cathode output terminal 232 of the rectifier and filter circuit 23 via the resistor R1. A breakdown voltage of the Zener diode D1 is a difference of the starting voltage of the switch driver 33 and that of the position detector and motor driver 32. Thereby in a case that the voltage outputted by the rectifier and filter circuit 23 is higher than the breakdown voltage of the Zener diode D1, the resistor R1 generates a voltage. In a case that the voltage outputted by the rectifier and filter circuit 23 is equal to a sum of the breakdown voltage of the Zener diode D1 and the starting voltage of the position detector and motor driver 32, the voltage generated by the resistor R1 is the starting voltage of the position detector and motor driver 32, thereby driving the position detector and motor driver 32 to start.

The starting time control module 50 further includes a capacitor C1 which is connected in parallel with the resistor R1 between the anode of the Zener diode D1 and the cathode output terminal 232, and the capacitor C1 is configured to store energy.

In a case that the switch driver 33 includes a first half-bridge driver 331 and a second half-bridge driver 332, the starting voltage of the switch driver 33 is a starting voltage of the first half-bridge driver 331 and the second half-bridge driver 332.

It can be understood that in more embodiments, any suitable time delay circuit other than the starting time control circuit according to the above-described embodiments may be used, to delay the starting time of the position detector and motor driver to be synchronous with that of the switch driver.

Positional relationships between the components in the drawings of the present disclosure are only electrical and logical relationships rather than represent an arrangement of the components in a product.

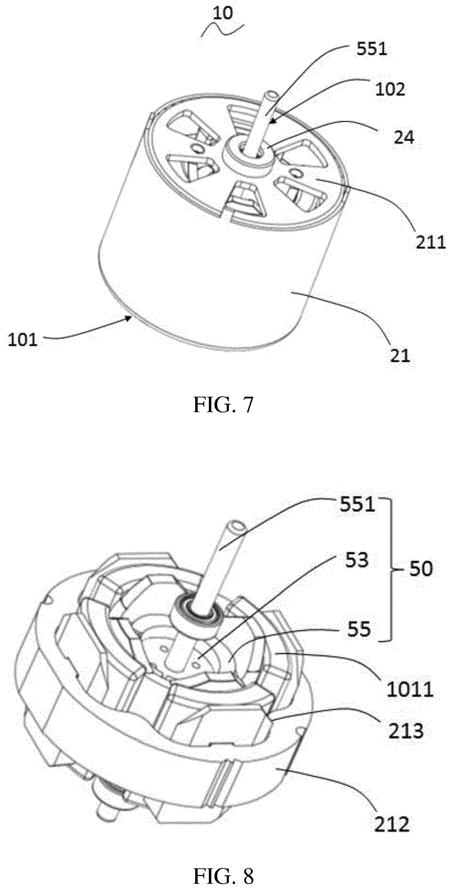

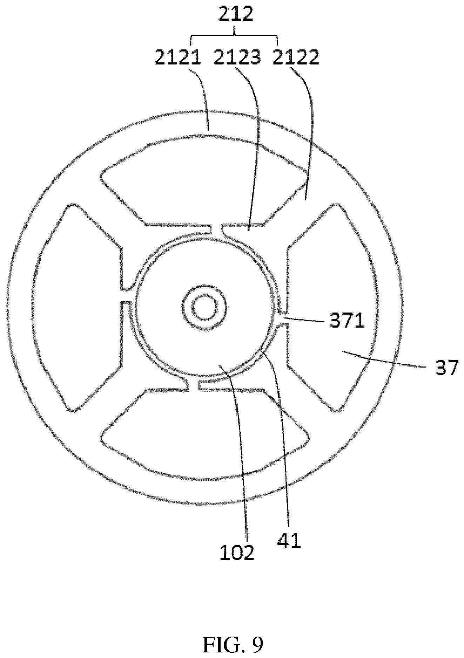

Reference is made to Figures 7 to 11, which are schematic structural diagrams of a single-phase direct current brushless motor 10 according to a preferred embodiment of the present disclosure. As described above, the single-phase direct current brushless motor 10 includes a stator 101 and a rotor 102 which can rotate relative to the stator.

The stator 101 includes a tubular housing 21 open at one end, an end cover 211 installed to the open end of the housing 21, a stator core 212 installed inside the housing 21, an insulating bobbin 213 installed to the stator core 212 and a winding 1011 which is wound around the insulating bobbin 213. The stator core 212 includes yoke which is an outer ring 2121 in this embodiment, a number of winding portions 2122 extending inwards from the outer ring 2121 and two pole shoes 2123 respectively extending from an end of each winding portion 2122 towards two sides along a circumferential direction, where the winding 1011 is wound around corresponding winding portions 2122. A wire slot 37 is formed between two adjacent winding portions, a slot opening 371 of the wire slot 37 is located between pole shoes 2123 of two winding portions, and the slot opening 371 is away from a center of the two adjacent winding portions, so that two pole shoes 2123 connected to one winding portion are asymmetric about the centre of the winding portions 2122, that is, a pole shoe with a large cross section and a pole shoe with a small cross section are formed.

The stator core 212 is made of a magnetic-conductive soft magnetic material, for example, the stator core 212 is formed with magnetic-conductive laminations (silicon steel sheets are commonly used in the industry) stacked along an axial direction of the motor. Preferably, the winding portions 2122 of the stator core 212 are evenly spaced along a circumferential direction of the motor, and each of the winding portions 2122 basically extends inwards from the outer ring 2121 along a radial direction of the motor. The pole shoes 2123 extend from a radial inner end of each winding portion 2122 towards two sides along a circumferential direction of the stator.

Preferably, a radial thickness of the pole shoe 2123 gradually decreases along a direction from the winding portion to the slot opening, due to which a reluctance of the pole shoe 2123 gradually increases along the direction from the winding portion to the slot opening. This configuration can make operating of the motor more stable and starting of the motor reliable.

The rotor 102 is surrounded by pole shoes 2123 of the stator, the rotor 102 includes a number of permanent-magnetic poles 55 arranged along the circumferential direction of the rotor, and preferably outer circumferential surfaces of the permanent-magnetic poles 55 are concentric with inner circumferential surfaces of the pole shoes, thereby forming a basically uniform air gap 41 between the outer circumferential surface of the rotor and the pole shoes. Specifically, the inner surfaces of the pole shoes are located at an imaginary concentric circle centered on a centre of the rotor 102. The outer surfaces 56 of the permanent-magnetic poles 55 are located at an imaginary concentric circle centered on the center of the rotor 102, that is, the inner circumferential surfaces of the pole shoes are concentric with the outer circumferential surfaces of permanent-magnetic poles 55, thereby forming the basically uniform air gap between the inner circumferential surfaces of the pole shoes and the outer circumferential surfaces of the permanent-magnetic poles 55. Preferably, a width of the slot opening 371 is greater than zero, and less than or equal to four times a thickness of the uniform air gap 41, and further, a minimum width of the slot opening 371 of the wire slot is less than or equal to three times the thickness of the uniform air gap or more preferably, less than or equal to two times the thickness of the uniform air gap. In this configuration, starting and rotating of the rotor are smoother, starting reliability of the motor can be improved, and dead points during starting can be reduced. A ring according to the present disclosure refers to a closed structure continuously extending along a circumferential direction, which may be circular, quadrate or polygonal, and the thickness of the uniform air gap 41 refers to a radial thickness of the air gap.

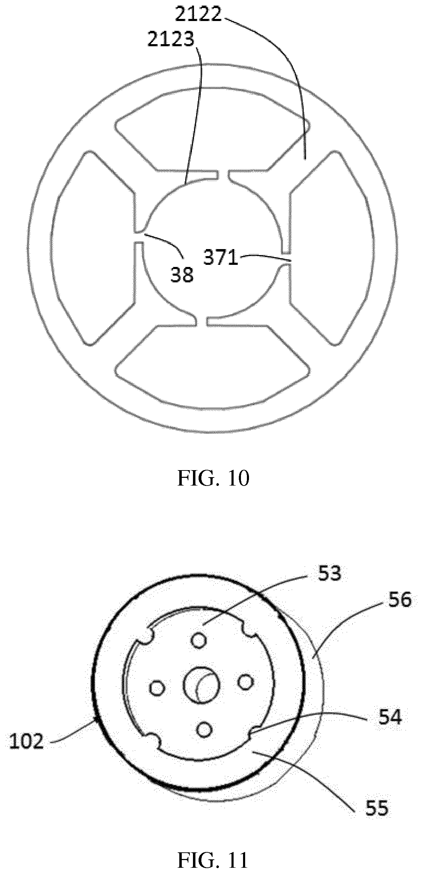

As shown in Figure 11, the permanent-magnetic poles 55 may be formed by one annular permanent magnet, and understandably, the permanent-magnetic poles 55 may alternatively be formed by multiple separate permanent magnets, as shown in Figure 8. In addition, the rotor 102 further includes a shaft 551 through the annular permanent-magnetic poles 55, where one end of the shaft 551 is installed to the end cover 211 of the stator via a bearing 24, and the other is installed to a bottom of the tubular housing 21 of the stator via another bearing, so that the rotor can rotate relative to the stator.

In the embodiment, the rotor 102 further includes a rotor core 53 which is penetrated through by the shaft 551 at a center and fixed together with the shaft 551; the permanent magnets are installed to an outer circumferential surface of the rotor core 53; and a number of grooves 54 extending along an axial direction are provided on the outer circumferential surface of the rotor core, and each of the grooves 54 is arranged at a boundary of two permanent-magnetic poles 55 to reduce magnetic leakage.

In the embodiment, the slot opening of the wire slot 37 is away from a center of two adjacent winding portions, that is, distances between a slot opening of each wire slot 37 and two adjacent winding portions are different, and therefore, lengths of two pole shoes extending from an end of each winding portion towards two sides along the circumferential direction are different. Such a configuration can enable an initial position of the rotor to be away from a position of a dead point. Preferably, a chamfering 38 is provided near the slot opening on the inner circumferential surface of a smaller pole shoe, which can further reduce an area of the smaller pole shoe, further increase non-uniformity of the two pole shoes, and thus can further deviate the initial position of the rotor from the position of the dead point.

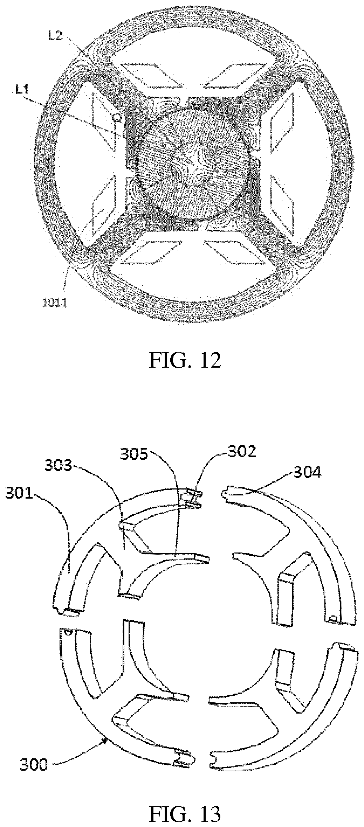

Figure 12 is a distribution diagram of lines of magnetic force of a permanent-magnetic pole 55 of the rotor, when a stator winding is powered off, i.e., the motor is in the initial position. As shown in Figure 12, the rotor includes four permanent-magnetic poles 55, where N poles and S poles are arranged alternately, and the stator includes four stator poles formed by four winding portions. According to Figure 12, when the motor is in the initial position, lines of magnetic force through the pole shoe with a larger area are apparently more than those through the pole shoe with a smaller area, a polar axis L1 of the magnetic poles of the rotor deviates from a polar axis L2 of the stator poles by a certain angle, and an included angle between the polar axis L1 and the polar axis L2 is called a starting angle. In the embodiment, the starting angle is greater than 45 electrical degrees and less than 135 electrical degrees, in a case that a current with a certain direction is applied to the stator winding of the motor, the rotor 102 can start in the direction, and in a case that a current with a opposite direction is applied to the stator winding of the motor, the rotor 102 can start in the opposite direction. Understandably, in a case that the starting angle is equal to 90 electrical degrees, it is easy for the rotor 102 to start in either direction. It is easier for the rotor to start in one direction than in the other in a case that the starting angle is not equal to 90 electrical degrees. According to experiments conducted by the inventors of the invention, the rotor has fine starting reliability in either direction in a case that the starting angle is within a range from 45 electrical degrees to 135 electrical degrees.

### Second embodiment

With reference to Figure 13, the embodiment differs from the previous embodiment in that in order to improve winding efficiency of the winding 1011, the stator core is formed by a number of stator core units 300 spliced together along the circumferential direction of the stator. Each stator core unit 300 includes a winding portion 303 having pole shoes 305 and a yoke segment 301 which is integrated with the winding portion 303 to form a monolithic member, and adjacent yoke segments 301 of the stator core units are combined together to form the outer ring of the stator core. Understandably, each stator core unit 300 may have more than one winding portion 303 and corresponding pole shoes 305. After forming a winding on each stator core unit, the stator core units 300 are spliced together, thereby forming the stator core having the stator winding. In the embodiment, each stator core unit 300 has one winding portion 303 and corresponding pole shoes 305; and in each stator core unit 300, an end of the winding portion 303 is connected between two ends of the yoke segment 301.

In the embodiment, a splicing surface of yoke segments 301 of adjacent stator core units is concave and convex engagement surfaces fitting with each other. Specifically, in a case that concave and convex engagement surfaces fitting with each other are provided, both ends of the yoke segment 301 for splicing into the outer ring are provided with a groove detent 304 and a convex snap-fit 302 which fits the groove detent 304; the groove detent 304 and the convex snap-fit 302 form a concave and convex bayonet structure; and during assembly, a convex snap-fit 302 of each stator core unit fits a groove detent 304 of an adjacent stator core unit, and a groove detent 304 of each stator core unit fits a convex snap-fit 302 of an adjacent stator core unit.

Since the stator core is formed by a number of stator core units 300 spliced together, a width of a slot opening of a wire slot between adjacent pole shoes 305 can be very small. Preferably, a minimum width of the slot opening of the wire slot is greater than zero, and less than or equal to three times a minimum thickness of the air gap. Further, the minimum width of the slot opening of the wire slot is less than or equal to two times the minimum thickness of the air gap. In the present disclosure, the width of the slot opening of the wire slot is a distance between two adjacent pole shoes.

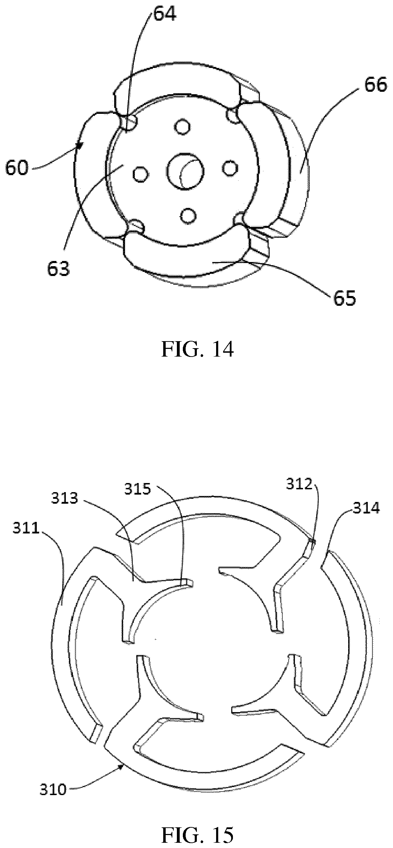

With reference to Figure 14, a rotor 60 in the embodiment includes a rotor core 63 and a permanent-magnetic pole 65 arranged along a circumferential direction of the rotor core 63, and the permanent-magnetic pole 65 is formed by a number of, for example, four, permanent magnets 66. The permanent magnets 66 are installed to an outer circumferential surface of the rotor core 63; and a number of grooves 64 extending along an axial direction are provided on the circumferential surface of the rotor core, and each of the grooves 64 is arranged at a boundary of two permanent magnets 66 to reduce magnetic leakage. The permanent magnets 66 are installed to the outer circumferential surface of the rotor core 63, in this case, inner surfaces of the pole shoes are located at an imaginary concentric circle centered on a centre of the rotor 60, and outer surfaces of all the permanent magnet 66 form a cylindrical surface, thereby enabling the air gap to be an uniform air gap.

### Third embodiment

With reference to Figure 15, in the embodiment, a stator core is formed by a number of stator core units 310 spliced together along the circumferential direction of a stator, each stator core unit 310 includes a winding portion 313, pole shoes 315 of the winding portion 313 and a yoke segment 311 which is integrated with the winding portion 313 to form a whole, and yoke segments 311 of adjacent stator core units are combined together to form the outer ring of the stator core. Understandably, each stator core unit may have more than one winding portion 313 and corresponding pole shoes 315. After winding of each stator core unit is completed, the stator core units 310 are spliced together, thereby forming the stator core having stator windings. In the embodiment, each stator core unit 310 has one winding portion 313 and corresponding pole shoes 315; and in each stator core unit 310, an end of the winding portion 313 is connected to an end of the yoke segment 311.

In the embodiment, a splicing surface of yoke segments 311 of adjacent stator core units is a plane, and adjacent yoke segments 311 may be assembled together by directly welding or by other means. Preferably, in order for better contacts between heads and tails of adjacent yoke segments, chamfers fitting with each other can be provided at ends of yoke segments 311 of adjacent stator core units. Specifically, a first chamfer 312 and a second chamfer 314 can be respectively provided at two ends of the yoke segment 311 of each stator core unit, and the first chamfer 312 and the second chamfer 314 of adjacent yoke segments 311 can tightly fit with each other.

Since the stator core is formed by a number of stator core units 310 spliced together, a width of a slot opening of a wire slot between adjacent pole shoes 315 can be very small. Preferably, a minimum width of the slot opening of the wire slot is greater than zero, and less than or equal to three times a minimum thickness of the air gap.

A wire slot is formed between two adjacent winding portions of the single-phase brushless motor according to the present disclosure, a slot opening of the wire slot is located between pole shoes of the two winding portions and away from one of the two winding portions. Thereby, a starting angle and a detent torque needed during starting of the single-phase brushless motor are directly adjusted with the slot opening of the wire slot, without providing a location slot or a location hole. For example, the starting angle of the motor is adjusted by adjusting how far the slot opening of the wire slot is away from one of the two winding portions, and in a case that the starting angle is greater than 45 electrical degrees and less than 135 electrical degrees, the rotor of the motor can start in both directions, thereby making the starting reliable.

### Fourth embodiment

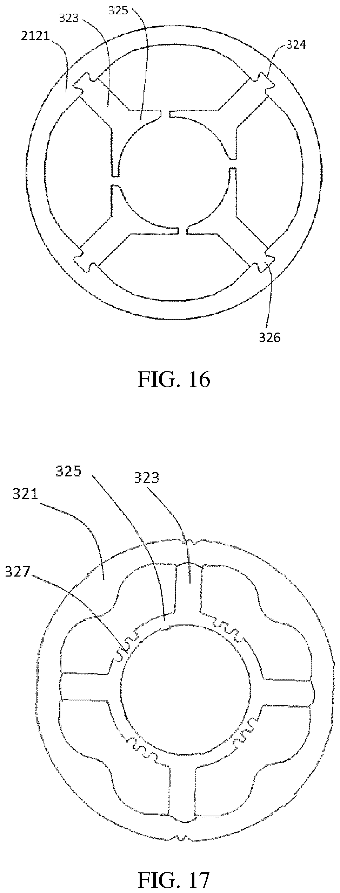

With reference to Figure 16, in order to improve the winding efficiency of a winding, a split-type structure is also applied in a stator core in the embodiment. Specifically, a winding portion 323 and corresponding pole shoes are integrally molded as a whole, and the winding portion 323 and an outer ring 2121 are of a split-type structure, that is, the winding portion 323 and the outer ring 2121 are formed separately and then assembled together. A splicing surface of the winding portion 323 and the outer ring 2121 is a plane or concave and convex engagement surfaces 324 and 326 fitting with each other, and understandably, each winding portion 323 can be fixed to the outer ring 2121 by means of welding or via mechanical connection (such as a snap joint through dovetail grooves). In an alternative solution, the winding portions 323, the outer ring 2121 and corresponding pole shoes 325 may be all formed separately, and then the winding portion 323 is fixed to the outer ring 2121 and the pole shoes 325 after winding of the winding is completed.

In the single-phase direct current brushless motor according to the embodiments of the present disclosure, the inner surfaces of the pole shoes of the stator core and the outer surfaces of the permanent-magnet poles of the rotor are respectively located at two imaginary concentric circles centered on the centre of the rotor, thereby forming a basically uniform air gap (the reason why it is called a basically uniform air gap is that parts of the air gap at the slot openings 37 are not uniform with the other parts of the air gap, or that parts of the air gap at the chamfers in the ends of the magnets in a case of tiled magnets are not uniform with the other parts of the air gap, where, however, the parts of the air gap at the slot openings or the ends of the magnets account for a very small proportion of a length of the entire air gap) between the stator and the rotor, and a width of the slot opening of the wire slot is less than or equal to four times a thickness of the uniform air gap, thereby reducing vibrations and noises caused by large slot openings and non-uniform air gaps in conventional technology. A split-type structure is applied in the stator core, so that winding can be performed with a double flier armature winding machine before the winding portions and the outer ring are assembled together, effectively improving winding efficiency in production.

In the above-described embodiments, the slot opening has a uniform circumferential width. Understandably, the slot opening may be non-uniform in width, alternatively, which may be of a shape of trumpet narrow at an inner end and wide at an outer end, and in this case, the width of the slot opening refers to a minimum width thereof. In the above-described embodiments, the slot opening is arranged along the radial direction of the motor, and alternatively, the slot opening may also be arranged deviating from the radial direction of the motor.

### Fifth embodiment

Understandably, adjacent pole shoes 325 of adjacent winding portions 323 in the above-described embodiments may also be connected via magnetic bridges 327, as shown in Figure17, the magnetic bridges 327 and the pole shoes of the winding portions 323 are connected together to form an inner ring, and the winding portions and the outer ring 321 may be arranged separately.

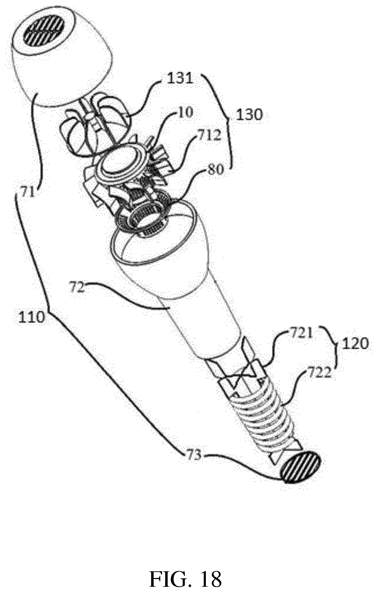

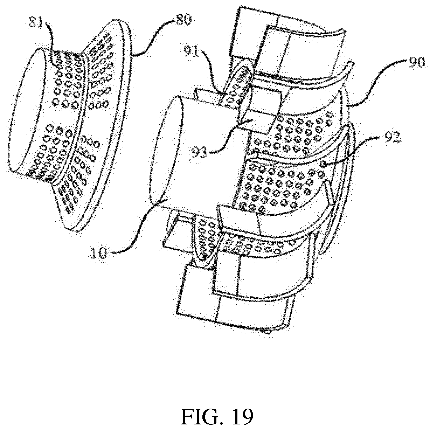

Reference is made to Figures 18 and 19, which are more detailed schematic structural diagrams of the hair dryer 100 according to the present disclosure.

The air supply unit 130 further includes a motor holder 90 and a motor cover 80; the motor holder 90 is tubular, an opening is provided at one end of the motor holder 90, a number of first through-holes 92 are provided on a side wall of the motor holder 90, the single-phase direct current brushless motor 10 is fixed inside the motor holder 90, and a output end of the single-phase direct current brushless motor is arranged at an end of the motor holder which is not provided with the opening; one end of the motor cover 80 is hollow cylinder-shaped, and the other is connected to the opening 91 of the motor holder and forms a Helmholtz resonant cavity with the motor holder; and a number of second through-holes 81 are provided on the motor cover.

In the embodiment, the motor holder 90 and the motor cover 80 are made of photosensitive resin; and a diameter of the hollow cylinder-shaped end of the motor cover 80 is less than that of the opening 91 of the motor holder 90. In addition, the air supply unit 130 further includes a snap-fit element 93, which is arranged at the end of the motor holder 90 provided with the opening and is configured to snap the motor holder 90 and the motor cover 80 together. Understandably, the motor holder 90 and the motor cover 80 may be connected to each other via other connections, such as a screw connection, which is not limited in the present disclosure. Preferably, a number of air deflectors 712 are provided on an outer wall of the motor holder 90.

The heating unit 120 includes more than two sheet heaters 721 and a spring 722 sleeved on each sheet heater 721, where neither end of each sheet heater 721 is sleeved inside the spring and two ends of each sheet heater extend along a direction perpendicular to a direction in which the spring compresses, thereby preventing the spring 722 from slipping off.

The housing 110 includes a first housing 71 and a second housing 72 which are connected with each other. The first housing 71 covers the impeller 131, and the second housing 72 covers the air supply unit 130 and the heating unit 120. The housing 110 further includes a bottom board 73, which is arranged at a bottom of the second housing 72 and functions as an air outlet of the electrical hair dryer. A handle of the housing 110 is not shown in the figure, which may be formed, as needed, by assembling one half thereof arranged on the first housing 71 and the other half arranged on the second housing 72.

The single-phase direct current brushless motor and the drive control circuit according to the embodiments of the present disclosure is especially suitable for a hair dryer with an air supply rate of 80 to 140 cubic meters per hour and a wind pressure of 280 to 720 pascal. A rated output power of the single-phase direct current brushless motor is 50 to 100 watts, numbers of magnetic poles of the stator and the rotor of the motor are the same and not greater than six, an outer diameter of the stator core is less than 35mm, and an axial thickness of the stator core is between 10mm and 20mm. The hair dryer 100 is not provided with a micro control unit (MCU), which can simplify the drive control circuit and reduce the cost of the circuit. On the other hand, since an external alternating supply voltage accessed via the power supply terminal is directly provided for the inverter after being rectified and filtered without being reduced, an input voltage of the inverter is not lower than that of the power supply terminal. With such a configuration, a case that the hair dryer fails to deliver cool air due to the air being heated by the heating unit which is traditionally functioned as a voltage dropper can be avoided.

In the motor drive circuit according to the embodiments of the present disclosure, since the external supply voltage is provided for the motor without being reduced, MOSFETs or IGBTs which can bear a great current are provided in the inverter. In addition, no MCU is provided in the circuit, and the MOSFETs or IGBTs can be driven with a Hall chip and a switch driver, resulting in a low cost of the whole circuit.

The single-phase direct current brushless motor and the drive control circuit according to the above-described embodiments of the present disclosure also apply to other air flow regulating devices such as a portable vacuum cleaner or a robot vacuum cleaner with a rated output power lower than 100 watts.

The above-described embodiments are only some preferred embodiments of the invention, which do not limit the invention in any form. In addition, modifications may be made by those skilled in the art within the spirit of the present disclosure, and of course, the modifications made within the spirit of the present disclosure shall fall within the scope of the present disclosure.

## Claims

1. An air flow regulating device (100), comprising a housing (110), an air supply unit (130) and a circuit board (140) which are arranged inside the housing (110), wherein the air supply unit (130) comprises an impeller (131) and a single-phase permanent magnet brushless motor (10) configured to drive the impeller (131), the single-phase permanent magnet brushless motor (10) comprises a stator (101) and a rotor (60, 102) which can rotate relative to the stator (101), the stator (101) comprising a stator core (212) and a single-phase winding (1011) wound around the stator core (212), the rotor (60, 102) comprises a shaft (551) and a permanent magnet (66) fixed to the shaft (551), numbers of magnetic poles of the stator (101) and the rotor (60, 102) are the same and not greater than six, the stator core (212) comprises a yoke (2121), a number of winding portions (2122, 303, 313, 323) extending from the yoke (2121) along a radial direction and two pole shoes (2123, 305) extending toward two sides along a circumferential direction from an end of each winding portion, **characterized in that** the stator (101) surrounds the rotor (60, 102), an outer diameter of the stator core (212) is less than 35mm and/or an axial thickness of the stator core (212) is between 10mm and 20mm, the winding (1011) is wound around the winding portions, a wire slot (37) is formed between two adjacent winding portions, pole shoes (2123, 305) of the two adjacent winding portions are disconnected by a slot opening (371), the slot opening (371) is arranged away from a symmetric center of the two adjacent winding portions and a chamfering (38) is provided near the slot opening (371) only on the inner circumferential surface of a smaller pole shoe (2123, 305).

2. The air flow regulating device according to claim 1, wherein the circuit board (140) is provided with a power supply terminal (20) and an inverter (31) configured to provide an alternating current for the single-phase winding (1011), the air flow regulating device is a hair dryer, and a heating unit (120) which is electrically connected to the circuit board (140) is arranged inside the housing (110).

3. The air flow regulating device according to claim 2, wherein an air supply rate of the hair dryer is 80 to 140 cubic meters per hour, and a wind pressure of the hair dryer is 280 to 720 pascal.

4. The air flow regulating device according to claim 2 or 3, wherein a rated output power of the single-phase permanent magnet brushless motor (10) is 50 to 100 watts.

5. The air flow regulating device according to claim 2, 3 or 4, wherein the power supply terminal (20) is configured to access an external alternating current power supply (200), and an input voltage of the inverter (31) is not lower than that of the power supply terminal.

6. The air flow regulating device according to claim 2, wherein the circuit board (140) is provided with a power supply terminal (20) and an inverter (31) configured to provide an alternating current for the single-phase winding (1011), the air flow regulating device is a vacuum cleaner and a rated output power of the vacuum cleaner is lower than 100 watts.

7. The air flow regulating device according to any one of claims 2 to 6, wherein a position detector and motor driver (32) is electrically connected between the power supply terminal (20) and the inverter (31), which is configured to detect a magnetic field position of a rotor (60, 102) of the single-phase permanent magnet brushless motor (10) and output at least two trigger signals which are basically inverted with respect to each other for the inverter (31).

8. The air flow regulating device according to claim 7, wherein the position detector and motor driver (32) is a single Hall effect controller chip having at least four pins.

9. The air flow regulating device according to any one of claims 2 to 8, further comprising a rectifier and filter circuit (23) configured to convert an alternating supply voltage accessed by the power supply terminal (20) into a direct voltage, and the inverter (31) is an H-bridge circuit comprising four semiconductor switches, at least one of the four semiconductor switches being a metal-oxide semiconductor field effect transistor which is abbreviated as MOSFET or an insulated gate bipolar transistor which is abbreviated as IGBT.

10. The air flow regulating device according to claim 9, wherein a switch driver (33) is electrically connected between the position detector and motor driver (32) and the inverter (31) and configured to amplify a trigger signal outputted by the position detector and motor driver and provide the amplified signal to the inverter (31) to drive the MOSFET or IGBT.

11. The air flow regulating device according to claim 1, wherein a radial thickness of the pole shoe (2123, 305) decreases gradually along a direction from the winding portion to the slot opening (371) and a basically uniform air gap (41) is formed between an outer circumferential surface of the rotor (60, 102) and the pole shoes (2123, 305).

12. The air flow regulating device according to claim 1 or 11, wherein the pole shoes (2123, 305) of the adjacent winding portions are disconnected by the slot opening (371), and a width of the slot opening (371) is less than or equal to four times a thickness of the uniform air gap (41).

13. The air flow regulating device according to any one of claims 1 to 12, wherein the permanent magnet (66) is a ring magnet, and an outer diameter of the ring magnet (66) is between 7.5mm and 11mm.

14. The air flow regulating device according to any one of claims 1 to 13, wherein no MCU is provided in the air flow regulating device.

## Patentansprüche

1. Luftstromregulierungsvorrichtung (100), umfassend ein Gehäuse (110), eine Luftversorgungseinheit (130) und eine Leiterplatte (140), die im Inneren des Gehäuses (110) angeordnet sind, wobei die Luftversorgungseinheit (130) ein Laufrad (131) und einen einphasigen bürstenlosen Permanentmagnetmotor (10) umfasst, der konfiguriert ist, um das Laufrad (131) anzutreiben, wobei der einphasige bürstenlose Permanentmagnetmotor (10) einen Stator (101) und einen Rotor (60, 102) umfasst, der sich relativ zum Stator (101) drehen kann, wobei der Stator (101) einen Statorkern (212) und eine einphasige Wicklung (1011) umfasst, die um den Statorkern (212) gewickelt ist, wobei der Rotor (60, 102) eine Welle (551) und einen an der Welle (551) befestigten Permanentmagneten (66) umfasst, wobei die Anzahl der Magnetpole des Stators (101) und des Rotors (60,102) gleich und nicht größer als sechs ist, der Statorkern (212) ein Joch (2121) umfasst, eine Anzahl von Wicklungsabschnitten (2122, 303, 313, 323), die sich von dem Joch (2121) entlang einer radialen Richtung erstrecken und zwei Polschuhe (2123, 305), sich von einem Ende jedes Wicklungsabschnitts über zwei Seiten entlang einer Umfangsrichtung erstrecken, **dadurch gekennzeichnet, dass** der Stator (101) den Rotor (60, 102) umgibt, ein Außendurchmesser des Statorkerns (212) kleiner als 35 mm und/oder eine axiale Dicke des Statorkerns (212) zwischen 10 mm und 20 mm ist, die Wicklung (1011) um die Wicklungsabschnitte gewickelt ist, ein Drahtschlitz (37) zwischen zwei benachbarten Wicklungsteilen gebildet ist, Polschuhe (2123, 305) der beiden benachbarten Wicklungsabschnitte durch eine Schlitzöffnung (371) getrennt sind, wobei die Schlitzöffnung (371) von einem symmetrischen Mittelpunkt der beiden benachbarten Wicklungsabschnitte entfernt angeordnet ist und eine Abschrägung (38) nahe der Schlitzöffnung (371) nur auf der Innenumfangsfläche eines kleineren Polschuhs (2123, 305) bereitgestellt ist.

2. Luftstromregulierungsvorrichtung nach Anspruch 1, wobei die Leiterplatte (140) mit einem Stromversorgungsanschluss (20) und einem Wechselrichter (31) bereitgestellt ist, die konfiguriert sind, um einen Wechselstrom für die einphasige Wicklung (1011) bereitzustellen, wobei die Luftstromregulierungsvorrichtung ein Haartrockner ist, und eine Heizeinheit (120), die mit der Leiterplatte (140) elektrisch verbunden ist, in dem Gehäuse (110) angeordnet ist.

3. Luftstromregulierungsvorrichtung nach Anspruch 2, wobei eine Luftzufuhrrate des Haartrockners 80 bis 140 Kubikmeter pro Stunde beträgt und ein Winddruck des Haartrockners 280 bis 720 Pascal beträgt.

4. Luftstromregulierungsvorrichtung nach Anspruch 2 oder 3, wobei eine Nennausgangsleistung des einphasigen bürstenlosen Permanentmagnetmotors (10) 50 bis 100 Watt ist.

5. Luftstromregulierungsvorrichtung nach Anspruch 2, 3 oder 4, wobei der Stromversorgungsanschluss (20) konfiguriert ist, um auf eine externe Wechselstromstromversorgung (200) zuzugreifen, und eine Eingangsspannung des Wechselrichters (31) nicht niedriger als die des Stromversorgungsanschlusses ist.

6. Luftstromregulierungsvorrichtung nach Anspruch 2, wobei die Leiterplatte (140) mit einem Stromversorgungsanschluss (20) und einem Wechselrichter (31) bereitgestellt ist, die konfiguriert sind, um einen Wechselstrom für die einphasige Wicklung (1011) bereitzustellen, wobei die Luftstromregulierungsvorrichtung ein Staubsauger ist und die Nennausgangsleistung des Staubsaugers niedriger als 100 Watt ist.

7. Luftstromregulierungsvorrichtung nach einem der Ansprüche 2 bis 6, wobei ein Positionsdetektor und ein Motortreiber (32) elektrisch zwischen dem Stromversorgungsanschluss (20) und dem Wechselrichter (31) verbunden ist, der konfiguriert ist, um eine Magnetfeldposition eines Rotors (60, 102) des einphasigen bürstenlosen Permanentmagnetmotors (10) zu erfassen und mindestens zwei Auslösesignale zu erfassen, die grundsätzlich mit Bezug aufeinander für den Wechselrichter (31) invertiert sind.

8. Luftstromregulierungsvorrichtung nach Anspruch 7, wobei der Positionsdetektor und der Motortreiber (32) ein einzelner Hall-Effekt-Steuerchip mit mindestens vier Stiften ist.

9. Luftstromregulierungsvorrichtung nach einem der Ansprüche 2 bis 8, ferner umfassend eine Gleichrichter- und Filterschaltung (23), die konfiguriert ist, um eine Wechselstromversorgungsspannung, auf die durch den Stromversorgungsanschluss (20) zugegriffen wird, in eine Gleichspannung umzuwandeln, und der Wechselrichter (31) eine H-Brückenschaltung umfassend vier Halbleiterschalter ist, wobei mindestens einer der vier Halbleiterschalter ein als MOSFET abgekürzter Metalloxidhalbleiter-Feldeffekttransistor oder ein als IGBT abgekürzter Bipolartransistor mit isoliertem Gate ist.

10. Luftstromregulierungsvorrichtung nach Anspruch 9, wobei ein Schaltertreiber (33) elektrisch zwischen dem Positionsdetektor und dem Motortreiber (32) und dem Wechselrichter (31) verbunden ist und konfiguriert ist, um ein von dem Positionsdetektor und dem Motortreiber ausgegebenes Auslösesignal zu verstärken und das verstärkte Signal dem Wechselrichter (31) bereitzustellen, um den MOSFET oder IGBT anzutreiben.

11. Luftstromregulierungsvorrichtung nach Anspruch 1, wobei eine radiale Dicke des Polschuhs (2123, 305) entlang einer Richtung vom Wicklungsabschnitt zur Schlitzöffnung (371) allmählich abnimmt und ein im Wesentlichen gleichmäßiger Luftspalt (41) zwischen einer Außenumfangsfläche des Rotors (60, 102) und den Polschuhen (2123, 305) gebildet wird.

12. Luftstromregulierungsvorrichtung nach Anspruch 1 oder 11, wobei die Polschuhe (2123, 305) der benachbarten Wicklungsabschnitte durch die Schlitzöffnung (371) getrennt werden, und eine Breite der Schlitzöffnung (371) kleiner oder gleich dem Vierfachen einer Dicke des gleichmäßigen Luftspalts (41) ist.

13. Luftstromregulierungsvorrichtung nach einem der Ansprüche 1 bis 12, wobei der Permanentmagnet (66) ein Ringmagnet ist und ein Außendurchmesser des Ringmagnets (66) zwischen 7,5 mm und 11 mm liegt.

14. Luftstromregulierungsvorrichtung nach einem der Ansprüche 1 bis 13, wobei keine MCU in der Luftstromregulierungsvorrichtung bereitgestellt ist.

## Revendications

1. Dispositif de régulation de débit d'air (100) comprenant un boîtier (110), une unité d'alimentation en air (130) et une carte de circuits imprimés (140) agencées à l'intérieur du boîtier (110), l'unité d'alimentation en air (130) comprenant une roue à aubes (131) et un moteur sans balai à aimant permanent monophasé (10) conçu pour entraîner la roue à aubes (131), le moteur sans balai à aimant permanent monophasé (10) comprend un stator (101) et un rotor (60, 102) pouvant tourner par rapport au stator (101), le stator (101) comprenant un noyau de stator (212) et un enroulement monophasé (1011) enroulé autour du noyau de stator (212), le rotor (60, 102) comprend un arbre (551) et un aimant permanent (66) fixé à l'arbre (551), le nombre de pôles magnétiques du stator (101) et du rotor (60, 102) est identique et ne dépasse pas six, le noyau de stator (212) comprend une culasse (2121), un certain nombre de parties d'enroulement (2122, 303, 313, 323) s'étendant à partir de la culasse (2121) dans une direction radiale et deux épanouissements polaires (2123, 305) s'étendant vers deux côtés le long d'une direction circonférentielle à partir d'une extrémité de chaque partie d'enroulement, **caractérisé en ce que** le stator (101) entoure le rotor (60, 102), un diamètre extérieur du noyau de stator (212) est inférieur à 35 mm et/ou une épaisseur axiale du noyau de stator (212) est compris entre 10 et 20 mm, l'enroulement (1011) est enroulé autour des parties d'enroulement, une fente pour fil (37) est formée entre deux parties d'enroulement adjacentes, des épanouissements polaires (2123, 305) des deux parties d'enroulement adjacentes sont déconnectées par une ouverture de fente (371), l'ouverture de fente (371) est disposée à l'écart d'un centre symétrique des deux parties d'enroulement adjacentes et un chanfreinage (38) est fourni à proximité de l'ouverture de fente (371) uniquement sur la surface circonférentielle interne d'un épanouissement polaire plus petit (2123, 305).

2. Dispositif de régulation de débit d'air selon la revendication 1, dans lequel la carte de circuits imprimés (140) est munie d'une borne d'alimentation (20) et d'un onduleur (31) conçu pour fournir un courant alternatif à l'enroulement monophasé (1011), le dispositif de régulation de débit d'air est un sèche-cheveux, et une unité de chauffage (120) qui est connectée électriquement à la carte de circuits imprimés (140) est agencée à l'intérieur du boîtier (110).

3. Dispositif de régulation de débit d'air selon la revendication 2, dans lequel un débit d'alimentation en air du sèche-cheveux est compris entre 80 et 140 m³/h et une pression du vent du sèche-cheveux est de 280 à 720 pascal.

4. Dispositif de régulation de débit d'air selon la revendication 2 ou 3, dans lequel une puissance de sortie nominale du moteur sans balai à aimant permanent monophasé (10) est de 50 à 100 watts.

5. Dispositif de régulation de débit d'air selon la revendication 2, 3 ou 4, dans lequel la borne d'alimentation (20) est conçue pour accéder à une alimentation en courant alternatif externe (200) et une tension d'entrée de l'onduleur (31) n'est pas inférieure à celle de la borne d'alimentation.

6. Dispositif de régulation de débit d'air selon la revendication 2, dans lequel la carte de circuits imprimés (140) est munie d'une borne d'alimentation (20) et d'un onduleur (31) conçu pour fournir un courant alternatif à l'enroulement monophasé (1011), le régulateur de débit d'air est un aspirateur et une puissance de sortie nominale de l'aspirateur est inférieure à 100 watts.

7. Dispositif de régulation de débit d'air selon l'une quelconque des revendications 2 à 6, dans lequel un détecteur de position et un pilote de moteur (32) sont connectés électriquement entre la borne d'alimentation (20) et l'onduleur (31), qui est conçu pour détecter une position de champ magnétique d'un rotor (60, 102) du moteur sans balai à aimant permanent monophasé (10) et pour émettre au moins deux signaux de déclenchement qui sont fondamentalement inversés l'un par rapport à l'autre pour l'onduleur (31).

8. Dispositif de régulation de débit d'air selon la revendication 7, dans lequel le détecteur de position et le pilote de moteur (32) sont constitués d'une puce de commande à effet Hall unique comportant au moins quatre broches.

9. Dispositif de régulation de débit d'air selon l'une quelconque des revendications 2 à 8, comprenant en outre un circuit redresseur et filtre (23) conçu pour convertir une tension d'alimentation alternative accédée par la borne d'alimentation (20) en une tension continue, et l'onduleur (31) est un circuit en pont en H comprenant quatre commutateurs à semi-conducteur, au moins l'un des quatre commutateurs à semi-conducteur est un transistor à effet de champ à semi-conducteur à oxyde métallique dont l'abréviation est MOSFET ou un transistor bipolaire à grille isolée dont l'abréviation est IGBT.

10. Dispositif de régulation de débit d'air selon la revendication 9, dans lequel un pilote d'interrupteur (33) est connecté électriquement entre le détecteur de position et le pilote de moteur (32) et l'onduleur (31) et est conçu pour amplifier un signal de déclenchement émis par le détecteur de position et le pilote de moteur et transmet le signal amplifié à l'onduleur (31) pour piloter le transistor MOSFET ou IGBT.

11. Dispositif de régulation de débit d'air selon la revendication 1, dans lequel une épaisseur radiale de l'épanouissement polaire (2123, 305) diminue progressivement dans une direction allant de la partie d'enroulement à l'ouverture de fente (371) et un entrefer essentiellement uniforme (41) est formé entre une surface circonférentielle extérieure du rotor (60, 102) et les épanouissements polaires (2123, 305).

12. Dispositif de régulation de débit d'air selon la revendication 1 ou 11, dans lequel les épanouissements polaires (2123, 305) des parties d'enroulement adjacentes sont déconnectés par l'ouverture de fente (371), et une largeur de l'ouverture de fente (371) est inférieure à ou égale à quatre fois une épaisseur de l'entrefer uniforme (41) .

13. Dispositif de régulation de débit d'air selon l'une quelconque des revendications 1 à 12, dans lequel l'aimant permanent (66) est un aimant annulaire et un diamètre extérieur de l'aimant annulaire (66) est compris entre 7,5 et 11 mm.

14. Dispositif de régulation de débit d'air selon l'une quelconque des revendications 1 à 13, dans lequel aucune unité de commande multipoint (MCU) n'est prévue dans le dispositif de régulation de débit d'air.
